**Europäisches Patentamt**

**European Patent Office**

**Office européen des brevets**

(19)

(11) Veröffentlichungsnummer: **0 004 562**
**B1**

(12) # EUROPÄISCHE PATENTSCHRIFT

(45) Veröffentlichungstag der Patentschrift:
08.04.81

(51) Int. Cl.³: **H 04 J 3/06**

(21) Anmeldenummer: **79100650.5**

(22) Anmeldetag: **05.03.79**

(54) Verfahren zur Rahmensynchronisierung eines Zeitmultiplexsystems und Schaltungsanordnung zur Durchführung des Verfahrens.

(30) Priorität: **17.03.78 DE 2811851**

(43) Veröffentlichungstag der Anmeldung:
**17.10.79 Patentblatt 79/21**

(45) Bekanntmachung des Hinweises auf die Patenterteilung:
**08.04.81 Patentblatt 81/14**

(84) Benannte Vertragsstaaten:
**BE CH DE GB IT NL SE**

(56) Entgegenhaltungen:
**DE-B-2 657 365**
**US-A-3 557 314**
**US-A-3 689 699**

(73) Patentinhaber: **SIEMENS AKTIENGESELLSCHAFT Berlin
und München, Postfach 22 02 61, D-8000 München 22 (DE)**

(72) Erfinder: **Siglow, Joachim, Tiroler Strasse 5B,
D-8190 Wolfratshausen (DE)**
Erfinder: **Grützmann, Sigmar, Dr., Röhrliberg 42,
CH-6330 Cham / Kanton Zug (CH)**
Erfinder: **Schenk, Erwin, Implerstrasse 53a,
D-8000 München 70 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchgebühr entrichtet worden ist (Art. 99(1) Europäisches Patentübereinkommen).

# Verfahren zur Rahmensynchronisierung eines Zeitmultiplexsystems und Schaltungsanordnung zur Durchführung des Verfahrens

Die Erfindung bezieht sich auf ein Verfahren und auf eine Schaltungsanordnung zur Rahmensynchronisierung eines Zeitmultiplexsystems mit einem Multiplexer, der pro Zeitmultiplexrahmen m Zeitschlitze bereitstellt und der ein Zeitmultiplexsignal abgibt, das pro Zeitmultiplexrahmen je $m-1$ Datenbits und je 1 Synchronisierbit enthält, wonach mindestens $p \geqslant 6$ einanderfolgende Synchronisierbits ein Synchronisierwort bilden, wonach vor Erreichen eines synchronen Zustandes ein Synchronisieralarmsignal abgegeben wird und wonach mit einem Synchronisiersignal die Rahmensynchronisierung beeinflußt wird. Zur Rahmensynchronisierung von Zeitmultiplexsystemen werden bekanntlich pro Zeitmultiplexrahmen mehrere Synchronisierbits übertragen, die insgesamt ein Synchronisierwort bilden. Durch empfangsseitige Decodierung dieses Synchronisierwortes wird die Lage des Zeitmultiplexrahmens erkannt und eine Zeitmultiplexrahmensynchronisierung ermöglicht. Wenn die Synchronisierworte nur aus einer relativ geringen Anzahl von Synchronisierbits gebildet werden, dann ist die Wahrscheinlichkeit der Vortäuschung von Synchronisiermerkmalen durch Datenworte relativ groß, so daß derartige Systeme häufig gestört sind. Wenn im Gegensatz dazu die Synchronisierworte aus vielen einzelnen Synchronisierbits gebildet werden, dann ist die Vortäuschung von Synchronisiermerkmalen durch Datenbits gering, aber es wird ein relativ großer Anteil der Kanalübertragungs-Kapazität zur Übertragung der Synchronisierinformationen beansprucht.

Gemäß der deutschen Auslegeschrift 26 57 365 ist bereits ein Verfahren zur Rahmensynchronisierung eines Zeitmultiplexsystems mit mehreren Datenkanälen bekannt. Dieses bekannte Verfahren wird realisiert mit mehreren Datenkanälen, mit einem Multiplexer, der pro Zeitmultiplexrahmen insgesamt m Zeitschlitze bereitstellt und ein Multiplexsignal abgibt, mit einem sendeseitigen Synchronisierbitgenerator, der Synchronisierbits erzeugt, die im Rahmen des Multiplexsignals von der Sendeseite zur Empfangsseite übertragen werden, mit einem empfangsseitigen Taktgeber zur Erzeugung eines Bittaktes, mit einem empfangsseitigen Adressengeber zum Betrieb eines Demultiplexers und mit einem empfangsseitigen Synchronisierdiskriminator, der mit Hilfe der Synchronisierbits ein Synchronisiersignal zum Betrieb des Adressengebers erzeugt.

Das oben erwähnte bekannte Verfahren ist gekennzeichnet durch die folgenden Schritte:

A) Der Synchronisierbitgenerator erzeugt pro Zeitmultiplexrahmen genau ein Synchronisierbit, und mindestens $p \geqslant 6$ einander folgende Synchronisierbits bilden je ein Synchronisierwort.

B) Die Synchronisierbits des Synchronisierbitgenerators werden sendeseitig über einen Datenkanal dem Multiplexer zugeführt.

C) Das Multiplexsignal wird empfangsseitig mit dem Bittakt seriell in ein Register eingegeben, das aus mindestens $2 pm - m$ Zellen gebildet wird.

D) Jede m-te Zelle des Registers ist mit einem ersten Decodierer bzw. zweiten Decodierer verbunden, die beide auf das Synchronwort ansprechen und ein erstes bzw. zweites Decodiersignal abgeben, und bei Koinzidenz des ersten und des zweiten Decodiersignals wird ein Synchronisiererkennungssignal abgegeben.

E) Mit dem Synchronisiererkennungssignal wird bei noch nicht erreichter Synchronisierung der Zählerstand eines Zählers zurückgesetzt, der ab einem Anfangszählerstand weitere $m - p$ Zählerstände zählt und der das Synchronisiersignal an den Adressengeber abgibt.

F) Das Synchronisiersignal wird einem Synchronisierwortzähler zugeführt, der bei Koinzidenz des Synchronisiersignals mit dem ersten Decodiersignal ein Rücksetzsignal abgibt, das den Zählerstand des Synchronisierwortzählers zurücksetzt, und der bei Erreichen eines vorgegebenen Zählerstandes ein Zählersignal abgibt.

G) Das Zählsignal wird einer Kippstufe zugeführt, die mit dem Synchronisierworterkennungssignal gesteuert wird und ein Alarmsignal abgibt, wenn das erste Decodiersignal ausbleibt.

Die Erfindung ist eine Weiterbildung des erwähnten bekannten Verfahrens. Der Erfindung liegt die Aufgabe zugrunde, ein Verfahren zur Rahmensynchronisierung anzugeben, das trotz Unempfindlichkeit gegen Vortäuschung von Synchronisiermerkmalen nur eine relativ geringe Kanalübertragungskapazität erfordert.

Die der Erfindung zugrunde liegende Aufgabe wird durch Anwendung der folgenden Schritte gelöst:

A) wenn im nicht synchronen Zustand (SA = 1) zwei aufeinanderfolgende Synchronisierworte (100010) erkannt werden, und wenn das Synchronisiersignal (Tp) in Phase mit den beiden Synchronisierworten (100010) ist, dann wird der Beginn eines Prüfzustandes (NOR1 = 1) und einer Prüfzeit (P) festgelegt.

B) Der Prüfzustand (NOR1 = 1) wird durch Übergang in den synchronen Zustand (SA = 0) beendet, falls das Synchronisiersignal (Tp) in Phase ist mit den Synchronisierworten (100010) und falls während p Zeitmultiplexrahmen oder einem Vielfachen von p Zeitmultiplexrahmen fortlaufend Synchronisierworte (100010) empfangen werden.

C) Der Prüfzustand (NOR1 = 1) wird durch Übergang in den nicht synchronen Zustand (SA = 1) beendet, falls das Synchronisiersignal (Tp) in Phase ist mit den Synchronisierworten (100010) und ein Synchronisierwort (100010) nicht erkannt wird oder falls bei nicht eingephastem Synchronisiersignal (Tp) mindestens zwei Synchronisierworte (100010) erkannt werden, deren Synchronisierbits (S) in verschiedenen Zeitschlitzen der Zeitmultiplexrahmen liegen.

Die Erfindung zeichnet sich dadurch aus, daß ein Synchronisieralarmsignal erzeugt wird, das außerhalb der Prüfzeit durch einzelne gestörte Synchronisierworte nicht beeinflußt wird, aber innerhalb der Prüfzeit bereits durch ein einziges falsches Synchronisierwort beeinflußt wird und das auch die Möglichkeit mehrerer aufeinanderfolgender Synchronisierworte in verschiedenen Zeitschlitzen des Zeitmultiplexrahmens berücksichtigt.

Falls Synchronisierworte in mindestens zwei verschiedenen Zeitschlitzen eines einzigen Zeitmultiplexrahmens übertragen werden und falls trotzdem eine verläßliche Rahmensynchronisierung durchgeführt und ein entsprechendes Synchronisieralarmsignal erzeugt werden soll, dann ist es zweckmäßig, die folgenden Maßnahmen durchzuführen:

A) Nach einer vorgegebenen Dauer des Synchronisieralarmsignals werden anstelle der Datenbits sendeseitiger Datenquellen Binärsignale vorgegebener Binärwerte gesendet, die sich von den Synchronisierworten unterscheiden.

B) Nach erfolgter Rahmensynchronisierung werden wieder die Datenbits der sendeseitigen Datenquellen gesendet.

Um den Beginn der Prüfzeit festzulegen, ist es zweckmäßig, daß die empfangsseitige Erkennung zweier aufeinanderfolgender Synchronisierworte mit Hilfe eines Synchronisiersignals signalisiert wird, daß der nichtsynchrone Zustand bzw. der synchrone Zustand mit Hilfe einer bistabilen Kippstufe signalisiert wird, die ein erstes bzw. zweites Kippstufensignal abgibt, daß das erste bzw. zweite Kippstufensignal mindestens eine Periode des Synchronisiersignals verzögert wird und ein verzögertes erstes bzw. zweites Kippstufensignal erzeugt wird und daß bei Koinzidenz des zweiten Kippstufensignals mit dem verzögerten ersten Kippstufensignal der Beginn der Prüfzeit signalisiert wird.

Diese Maßnahmen können mit einer Schaltungsanordnung realisiert werden, die dadurch gekennzeichnet ist, daß ein Schieberegister vorgesehen ist, das aus mehreren Zellen besteht, deren Inhalt beim Auftreten des ersten Kippstufensignals gelöscht wird, daß dem Schieberegister die Impulse des Synchronisiersignals als Schiebeimpulse zugeführt werden, daß dem Schieberegister das Kippstufensignal seriell zugeführt wird und daß vom Ausgang einer der Zellen des Schieberegisters das verzögerte Kippstufensignal abgegeben wird.

Im folgenden werden Ausführungsbeispiele der Erfindung anhand der Fig. 1 bis 7 beschrieben, wobei in mehreren Figuren dargestellte gleiche Gegenstände mit gleichen Bezugszeichen gekennzeichnet sind. Es zeigt

Fig. 1 ein Zeitmultiplexsystem,

Fig. 2 einige Signale, die beim Betrieb des in Fig. 1 dargestellten Zeitmultiplexsystems auftreten,

Fig. 3 eine ausführlichere Darstellung eines in Fig. 1 schematisch dargestellten Synchronisierdiskriminators,

Fig. 4 einige Signale, die beim Betrieb des in Fig. 2 dargestellten Synchronisierdiskriminators im synchronen Zustand auftreten,

Fig. 5 einige Signale, die beim Betrieb des in Fig. 3 dargestellten Synchronisierdiskriminators im Zuge der Rahmen-Synchronisiersuche auftreten,

Fig. 6 einige Signale, die beim Betrieb des in Fig. 3 dargestellten Synchronisierdiskriminators im Zuge der Synchronisierüberwachung auftreten und

Fig. 7 einige Signale, die beim Betrieb des in Fig. 3 dargestellten Synchronisierdiskriminators auftreten, falls gleichzeitig Synchronisierworte über mehrere Kanäle gesendet werden.

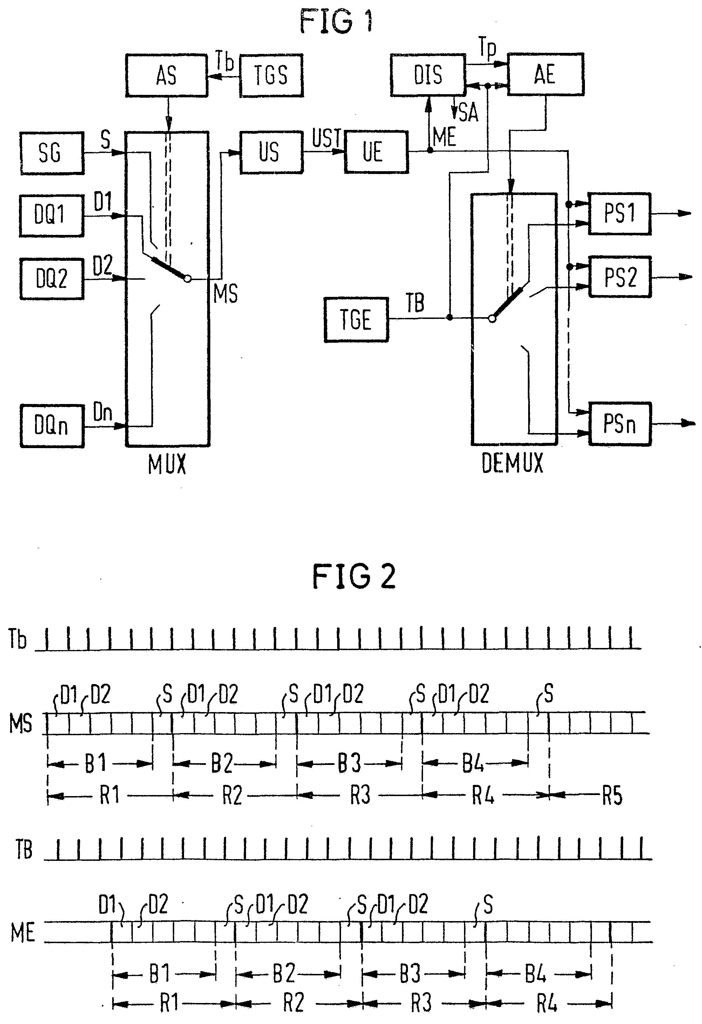

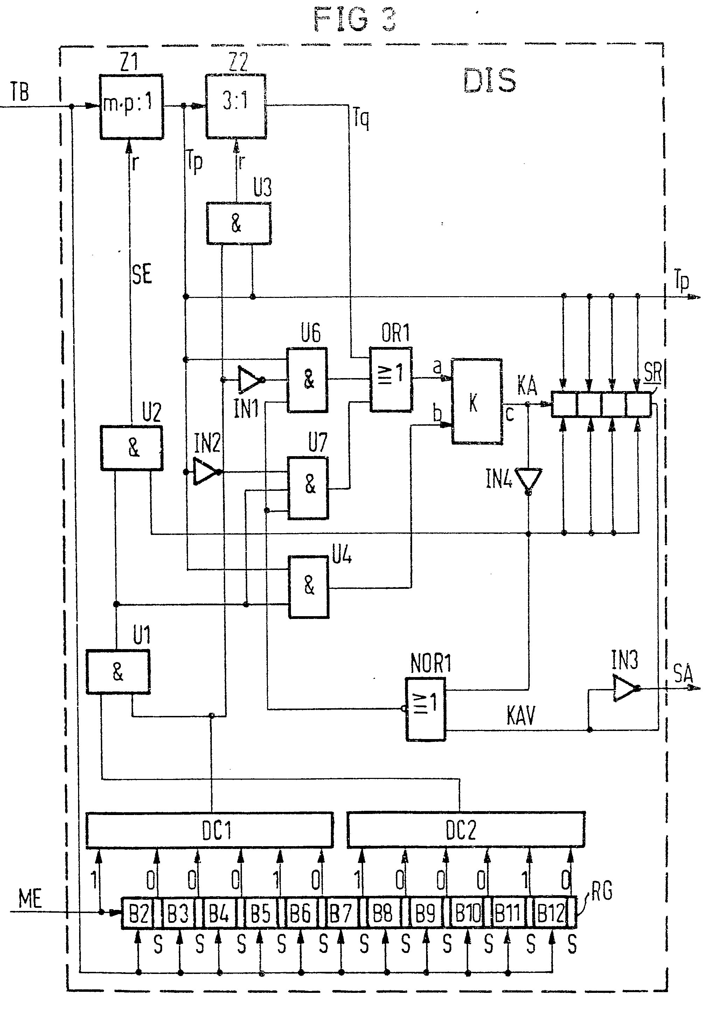

Fig. 1 zeigt den Synchronisierbitgenerator SG und die Datenquellen DQ1, DQ2 ... DQn, deren Ausgänge über zugeordnete Datenkanäle an Eingänge des Multiplexers MUX angeschlossen sind. Über einen ersten Datenkanal wird somit das Signal S des Synchronisierbitgenerators abgegeben und über weitere Datenkanäle werden die Datensignale D1, D2 ... Dn an den Multiplexer MUX abgegeben. Die Signale S und D1, D2 ... Dn bestehen aus Folgen einzelner Bits, aus denen mit Hilfe des Multiplexers MUX das sendeseitige Multiplexsignal MS gewonnen wird, das sich pro Zeitmultiplexrahmen aus mindestens einem Anteil aller Signale S, D1, D2 ... Dn zusammensetzt. Falls die Signale S, D1, D2 ... Dn mit gleicher Bitrate abgegeben werden, dann enthält das Zeitmultiplexsignal MS pro Zeitmultiplexrahmen je einen Anteil aller Signale. Die Datensignale D1, D2 ... Dn können aber auch mit verschiedener Bitrate abgegeben werden, so daß pro Zeitmultiplexrahmen mehrere Anteile von den einzelnen Datensignalen D1, D2 ... Dn zum Zeitmultiplexsignal MS beigesteuert werden. Der Multiplexer MUX wird mit Hilfe des sendeseitigen Adressengebers AS betrieben, wobei auf Details der Übernahme der einzelnen Signale S, D1, D2 ... Dn hinsichtlich der Taktung nicht eingegangen wird, weil diese Details als bekannt vorausgesetzt werden und außerhalb des Rahmens der vorliegenden Erfindung liegen. Beispielsweise sind im allgemeinen Pufferspeicher erforderlich, um die Signale S, D1, D2 ... Dn zum richtigen Zeitpunkt im Multiplexer MUX zu bearbeiten. Es wird angenommen, daß derartige Pufferspeicher, falls erforderlich, innerhalb des Multiplexers MUX angeordnet sind.

Fig. 2 zeigt die Gewinnung des Multiplexsignals MS, wobei beispielsweise insgesamt sechs Kanäle vorausgesetzt sind, wogegen in der Praxis im allgemeinen eine wesentlich größere Anzahl von Kanälen vorgesehen sind. Der Bittakt Tb wird von dem in Fig. 1 dargestellten Taktgeber TGS erzeugt. Jeder Zeitmultiplexrahmen R1, R2, R3, R4, R5 des Zeitmultiplexsignals MS enthält außer den einzelnen Bits der Datensignale D1, D2 ... je ein Synchronisierbit S. Auf die Bits B1, B2, B3, B4 der einzelnen Datensignale D1, D2 ... folgt immer je ein Synchronisierbit S.

Die Einfügung dieser Synchronisierbits S zwischen die einzelnen Bits B1, B2, B3, B4 der Datensignale kann einerseits in der Art erfolgen, wie sie in Fig. 1 dargestellt ist. Danach ist der Synchronisierbitgenerator SG als Datenquelle geschaltet. Es wäre grundsätzlich aber auch denkbar, daß auf der Sendeseite gemäß Fig. 1 nur die Datenquelle DQ1 bis DQn vorgesehen sind und daß im Übertragungsweg anschließend an den Multiplexer MUX die Synchronisierbits S eingefügt werden.

Das Multiplexsignal MS wird mit Hilfe der in Fig. 1 dargestellten sendeseitigen Übertragungseinrichtung US über die Übertragungsstrecke UST übertragen und mit Hilfe der empfangsseitigen Übertragungseinrichtung UE empfangen. Der empfangsseitige Taktgeber TGE erzeugt den Bittakt TB, der auch in Fig. 2 dargestellt ist. Das empfangsseitige Multiplexsignal ME gleicht im wesentlichen dem sendeseitigen Zeitmultiplexsignal MS, tritt aber diesem gegenüber zeitverzögert auf.

Dem in Fig. 1 dargestellten Synchronisierdiskriminator DIS wird das Zeitmultiplexsignal ME zugeführt und es wird das Synchronisiersignal Tp gewonnen, das zur Steuerung des empfangsseitigen Adressengebers AE dient. Das Zeitmultiplexsignal ME wird den Pufferspeichern PS1, PS2 ... PSn zugeführt, die unter Verwendung des Demultiplexers DEMUX und mit Hilfe des Bittaktes TB aktiviert werden. Die Rahmensynchronisierung bezweckt im wesentlichen den Rahmengleichlauf des sendeseitigen Multiplexers MUX und des empfangsseitigen Demultiplexers DEMUX, was dadurch erreicht wird, daß der Adressengeber AE immer derart zurückgesetzt wird, daß die Datensignale D1, D2 ... Dn der Reihe nach in den Pufferspeichern PS1, PS2 ... PSn zwischengespeichert werden. An die Ausgänge dieser Pufferspeicher sind in Fig. 1 nicht dargestellte Datenendgeräte angeschlossen.

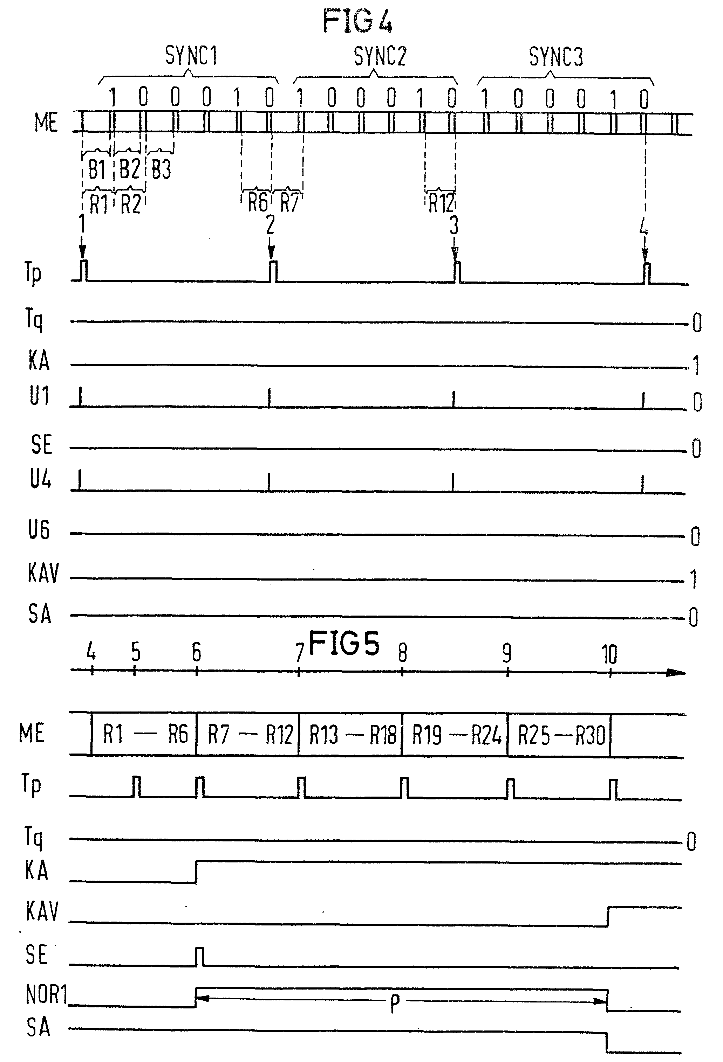

Fig. 3 zeigt ausführlicher den in Fig. 1 schematisch dargestellten Synchronisierdiskriminator DIS. Die Fig. 4 bis 7 zeigen Signale, die beim Betrieb dieses Synchronisierdiskriminators auftreten. Das empfangsseitige Multiplexsignal ME wird seriell dem Register RG zugeführt, das als Schieberegister betrieben wird, wobei die Impulse des Bittaktes TB als Schiebetakt verwendet werden. Das Register RG enthält die Blöcke B2, B3, B4, B5, B6, B7, B8, B9, B10, B11, B12, die mit gleichen Bezugszeichen wie die in Fig. 2 dargestellten Bits bezeichnet sind, weil diese Blöcke zur Speicherung dieser Bits dienen. Im Anschluß an die Blöcke B2 bis B12 folgt jeweils eine Zelle S zur Speicherung der in Fig. 2 mit gleichen Bezugszeichen bezeichneten Synchronisierbits. Bei diesem Ausführungsbeispiel bestehen die einzelnen Blöcke B2 bis B12 aus je sechs Zellen, wogegen bei einem praktisch realisierten Ausführungsbeispiel diese Blöcke B2 bis B12 aus je 46 Zellen bestehen, denen je eine Zelle S folgt. Innerhalb des Zeitmultiplexrahmens werden somit bei diesem praktisch realisierten Ausführungsbeispiel insgesamt 47 Bits übertragen.

Die Decodierer DC1 und DC2 sprechen beide auf das Synchronisierwort 100010 an und geben bei Erkennung dieser Synchronisierworte jeweils 1-Signale ab. Zur Erkennung des ersten Synchronisierwortes mit Hilfe des Decodierers DC1 sind nur die Blöcke B2 bis B6 und die entsprechenden Zellen S erforderlich, weil das Zeitmultiplexsignal ME direkt dem ersten Eingang des Decodierers DC1 zugeführt ist.

Der Bittakt TB wird dem Zähler Z1 zugeführt, der nach insgesamt $p \cdot m$ Impulsen einen Ausgangsimpulse Tp abgibt. Es werden insgesamt m Zeitschlitze des Zeitmultiplexsignals vorausgesetzt. Gemäß Fig. 2 wäre m = 6 anzunehmen und bei einem realisierten Ausführungsbeispiel enthält ein Zeitmultiplexrahmen mit m = 47 insgesamt 47 Zeitschlitze. Das über den Ausgang des Zählers Z1 abgegebene Signal Tp ist in Fig. 4 dargestellt. Den Bits B1, B2, B3 ... des Multiplexsignals ME folgen wieder die Synchronisierbits, so daß ab der Zeit 1 bis zur Zeit 2 das Synchronisierwort SYNC1 = 100010 empfangen wird. Die Synchronisierworte SYNC2 und SYNC3 bestehen aus den gleichen Synchronisierbits und werden zu späteren Zeitpunkten empfangen. Das Synchronisierwort SYNC1 wird somit während der Dauer der Zeitmultiplexrahmen R1 bis R6 übertragen und das Synchronisierwort SYNC2 wird während der Dauer der Zeitmultiplexrahmen R7 bis R12 übertragen. In ähnlicher Weise wird auch das Synchronisierwort SYNC3 während der Dauer von sechs Zeitmultiplexrahmen übertragen. Alle Synchronisierworte bestehen aus je p = 6 Synchronisierbits S.

Der Zähler Z2 ist als Synchronisierwortzähler zu bezeichnen, weil er eingangs das Synchronisiersignal Tp enthält und dessen Impulse zählt. Falls er nicht vorher zurückgestellt wird, zählt er bis 3 und gibt dann über seinen Ausgang das Signal Tq ab. Jeder der Zähler Z1, Z2 hat einen Rücksetzeingang r und wird bei Empfang eines 1-Signals auf je einen Anfangszählerstand zurückgesetzt. Die Kippstufe K kann zwei stabile Zustände einnehmen und gibt während der Dauer eines 0- bzw. 1-Zustandes ein 0- bzw. 1-Signal über ihren Ausgang c ab. Ein Übergang vom 0- in den 1-Zustand erfolgt immer dann, wenn am Eingang b ein 1-Signal auftritt. Ein Übergang vom 1-Zustand in den 0-Zustand erfolgt dann, wenn am Eingang a ein 1-Signal auftritt. Über den Ausgang c der Kippstufe K wird das Signal KA abgegeben.

Die Wirkungsweise des in Fig. 3 dargestellten Synchronisierdiskriminators DIS wird nun anhand der in Fig. 4 dargestellten Signale für den Fall beschrieben, daß der Synchronisierzustand bereits erreicht ist. Eine mindestens kurzdauernde Synchronisierung wird durch das Signal KA = 1 signalisiert. Die Decodierer DC1 und DC2 erkennen laufend die empfangenen Synchronisierworte und geben jeweils 1-Signale an das UND-Glied U1 ab, weshalb auch dieses Glied zu den Zeitpunkten 1, 2, 3 4 jeweils 1-Signale abgibt, die in Fig. 4 mit dem gleichen Bezugszeichen U1 bezeichnet sind. Diese 1-Signale U1 kommen jedoch am Ausgang des UND-Gliedes U2 nicht zur Wirkung, weil wegen des Inverters IN4 ein 0-Signal an einem Eingang des UND-Gliedes U2 anliegt, so daß über den Ausgang des UND-Gliedes U2 das Signal SE = 0 abgegeben wird. Während der Dauer des Signals SE = 0 erfolgt somit keine Rückstellung des Zählers Z1, so daß die Zählweise dieses Zählers nicht geändert und das Synchronisiersignal Tp, wie in Fig. 4 dargestellt, abgegeben wird. Da die Ausgangssignale des Decodierers DC1 mit den einzelnen Impulsen des Synchronisiersignals Tp unter den gemachten Voraussetzungen koinzidieren, werden über den Ausgang des UND-Gliedes U3 etwa zu den Zeitpunkten 1, 2, 3 4 laufend 1-Signale abgegeben, welche die Zählerstände des Zählers Z2 zurückstellen, so daß das Signal Tq = 0 abgegeben wird.

Das Signal Tq ist dauernd ein 0-Signal, weil der Zähler Z2 laufend zurückgestellt wird. Über die Ausgänge der Glieder U6 und U7 werden laufend 0-Signale abgegeben, weil das Glied NOR1 unter den gemachten Voraussetzungen ein 0-Signal liefert. Am Glied OR1 liegen somit drei 0-Signale an, so daß auch über dessen Ausgang und am Eingang a der Kippstufe K ein 0-Signal anliegt und das Signal KA = 1 nicht geändert wird. Wenn wir annehmen, daß dieser Zustand mehr als drei Perioden des Signals Tp andauert, dann ergibt sich am Ausgang des Schieberegisters SR das Signal KAV = 1 und über den Ausgang des Inverters IN3 wird das Signal SA = 0 abgegeben, das keinen Synchronisieralarm bedeutet.

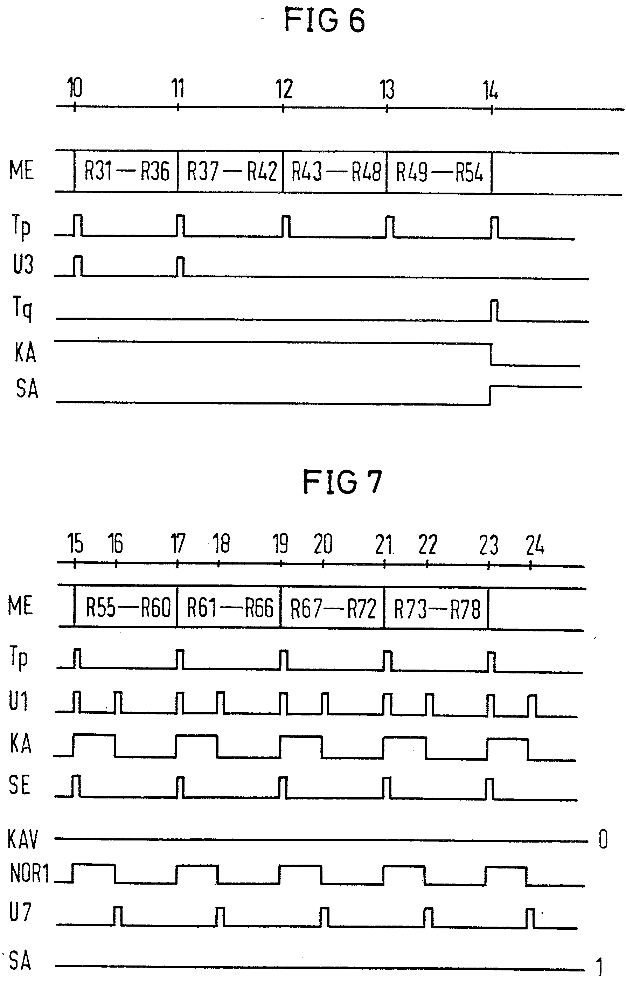

Fig. 5 zeigt mehrere Abschnitte des Zeitmultiplexsignals ME, während der je ein Synchronisierwort übertragen wird. Es sind dies die Zeitmultiplexrahmen R1 bis R6 bzw. R7 bis R12 bzw. R13 bis R18 bzw. R19 bis R24 und R25 bis R30. Ab der Zeit 4 bis zur Zeit 6 besteht ein nichtsynchroner Zustand. Dieser ist beispielsweise an dem Auftreten des Impulses Tp zur Zeit 5 erkenntlich. Auch das Signal KA = 0 signalisiert bis zur Zeit 6 den nichtsynchronen Zustand. Während der Dauer dieses nichtsynchronen Zustandes wird mit dem Schieberegister SR das Signal KA = 0 in den einzelnen Zellen gespeichert und im Takt der Impulse Tp von einer Zelle in die nächste geschoben. Während der Dauer dieses nichtsynchronen Zustandes wird über den Ausgang des Schieberegisters SR das Signal KAV = 0 abgegeben und über den Inverter IN3 wird das Signal SA = 1 abgegeben, das einen Synchronisieralarm signalisiert.

Vor der Zeit 6 wird über den Ausgang des Inverters IN4 ein 1-Signal an einen Eingang des UND-Gliedes U2 abgegeben und damit wird die Bereitschaft zur Einleitung der Synchronisierung hergestellt. Es wird angenommen, daß zur Zeit 6 die beiden Decodierer DC1 und DC2 das Synchronisierwort erkennen, so daß über das UND-Glied U1 ein 1-Signal abgegeben und über den Ausgang des UND-Gliedes U2 das Synchronisiererkennungssignal SE = 1 abgegeben wird. Mit diesem Synchronisiererkennungssignal SE wird der Zähler Z1 zurückgesetzt, so daß er ab der Zeit 6 seinen Zählzyklus beginnt und zum Zeitpunkt 7 am Ende des Zeitmultiplexrahmens R12 einen Impuls des Signals Tp abgibt. Auch in weiterer Folge zu den Zeitpunkten 8, 9 und 10 werden jeweils Impulse des Signals Tp abgegeben. Die Impulse des Signals Tp haben somit ab der Zeit 6 die richtige Phasenlage in bezug auf die Zeitmultiplexrahmen des Multiplexsignals ME.

Zur Zeit 6 werden der Impuls des Signals Tp und der Ausgangsimpuls des UND-Gliedes U1 dem UND-Glied U4 zugeführt, so daß über dessen Ausgang ein 1-Signal an den Eingang b der Kippstufe K zugeführt wird. Die Kippstufe K wird auf diese Weise ab der Zeit 6 in ihren zweiten stabilen Zustand versetzt und gibt das Signal KA = 1 ab.

Bereits vor dem Zeitpunkt 6 wurden die Inhalte der Zellen des Schieberegisters SR gelöscht, weil über den Ausgang des Inverters IN4 ein 1-Signal abgegeben wurde. Ab dem Zeitpunkt 6 wird das Signal KA = 1 in das Schieberegister SR übernommen und zum Zeitpunkt 10 wird das um vier Perioden des Signals Tp verzögerte Signal KAV = 1 über den Ausgang der letzten Zelle des Schieberegisters SR abgegeben. Im Zusammenhang damit wird mit dem Signal SA = 1 bis zum Zeitpunkt 10 Synchronisieralarm gegeben und danach mit dem Signal SA = 0 der Synchronisieralarm aufgehoben.

Das Glied NOR1 gibt über seinen Ausgang nur dann ein 1-Signal ab, wenn an beiden Eingängen 0-Signale anliegen. Mit diesem Glied NOR1 wird somit ab dem Zeitpunkt 6 bis zum Zeitpunkt 10 eine Prüfzeit P festgelegt, die gleich vier Perioden des Signals Tp beträgt und innerhalb der überprüft wird, ob der Decodierer DC1 immer noch die empfangenen Synchronisierworte 100010 erkennt. Würde der Decodierer DC1 beispielsweise zur Zeit 7 das Synchronisierwort nicht erkennen, dann würde der Inverter IN1 ein 1-Signal abgeben und mit den Signalen Tp = 1 und NOR1 = 1 würde über den Ausgang des Gliedes U6 und über das Glied OR1 ein 1-Signal an den Eingang a der Kippstufe K gegeben werden. Damit würde aber die Kippstufe K in ihren ersten Zustand versetzt werden, während dem sie das Signal KA = 0 abgibt. Mit dem Signal KA = 0 und dem entsprechenden 1-Signal am Ausgang des Inverters IN4 würden die Speicherinhalte der Zellen des Schieberegisters SR gelöscht werden, so daß der Synchronisieralarm nicht zum Zeitpunkt 10 sondern eventuell erst zu einem späteren Zeitpunkt aufgehoben werden könnte. Gleichzeitig würde mit dem 1-Signal am Ausgang des Inverters IN4 wieder die Synchronisierbereitschaft eingeleitet werden. Auch wenn zu den Zeitpunkten 8 oder 9 keine Synchronisierworte erkannt werden, wird unmittelbar darauf mit dem Signal KA = 0 wieder der nichtsynchrone Zustand signalisiert und die Aufhebung des Synchronisieralarms hinausgeschoben.

Im Fall von Störungen sollten auf der Empfangsseite keine Synchronisierworte signalisiert werden, die in einem Zufallstext im Signal ME enthalten sein können. Wenn die beiden Decodierer DC1 und DC2 zeitlich nacheinander zwei Synchronisierworte mit je sechs Bits erkennen, dann sind zur Berechnung der Wahrscheinlichkeit des Auftretens zufälliger Synchronisierworte insgesamt zwölf Bits und damit $2^{12}$ verschiedene Bitkombinationen möglich. Unter der Annahme, daß diese Bitkombinationen alle gleich wahrscheinlich sind, ergibt sich für ein zufälliges Auftreten der beiden aufeinanderfolgenden Synchronisierworte eine Wahrscheinlichkeit von $1/2^{12}$. Unter Verwendung des Schieberegisters SR wird diese Wahrscheinlichkeit insofern wesentlich erniedrigt, als nunmehr vier aufeinanderfolgende Synchronisierworte mit je sechs Bit zu berücksichtigen sind. Unter dieser Voraussetzung ergeben sich $2^{36}$ mögliche Bitkombinationen, so daß nunmehr die Wahrscheinlichkeit für ein zufälliges Auftreten von vier aufeinanderfolgenden Synchronisierworten gleich $1/2^{36}$ beträgt. Je größer die Anzahl der einzelnen Zellen des Schieberegisters SR ist und je größer damit die Prüfzeit P ist, desto unwahrscheinlicher ist es, daß irrtümlich und zufällig auftretende Bitkombinationen Synchronisierworte vortäuschen.

Fig. 6 zeigt die Überwachung der Synchronisierung und gegebenenfalls den Übergang vom synchronen Zustand in den nichtsynchronen Zustand. Es sind wieder einige Abschnitte des Zeitmultiplexsignals ME dargestellt betreffend die Zeitmultiplexrahmen R31 bis R36 bzw. R37 bis R42 bzw. R43 bis R48 bzw. R49 bis R54. Es wird angenommen, daß zur Zeit 11 der letzte Impuls über den Ausgang des Gliedes U3 abgegeben wurde und daß damit der Zähler Z2 zurückgestellt wurde. Zu den Zeitpunkten 12, 13 und 14 werden also keine Rückstellungen mehr vorgenommen, weil der Decodierer DC1 keine Synchronisierworte 100010 erkennt. Zu den Zeitpunkten 12, 13 und 14 werden aber Impulse Tp abgegeben und dem Zähler Z2 als Zählimpulse zugeführt. Als Ergebnis dieses Zählvorganges wird zur Zeit 14 ein Impuls des Signals Tq erzeugt, der über das Glied OR1 und über den Eingang a die Kippstufe K erreicht und das Signal KA = 0 auslöst. In weiterer Folge wird kurz nach dem Zeitpunkt 14 mit dem Signal SA = 1 Synchronisieralarm gegeben.

Vor Erreichen des synchronen Zustandes wird also mit Hilfe des Signals SA = 1 ein Synchronisieralarm gegeben und nach zwei aufeinanderfolgenden Synchronisierworten 100010 wird der Beginn einer Prüfzeit P festgelegt, deren Dauer mindestens ein Vielfaches von p Zeitmultiplexrahmen R1, R2 ... beträgt. Falls während der Prüfzeit P fortlaufend Synchronisierworte 100010 empfangen werden, dann wird der Synchronisieralarm abgeschaltet und es wird über den Ausgang des in Fig. 3 dargestellten Inverters IN3 das Signal SA = 0 abgegeben. Falls während der Prüfzeit P ein einziges Synchronisierwort 100010 nicht erkannt wird, dann bleibt der Synchronisieralarm bestehen und es wird über den Ausgang des Inverters IN3 das Signal SA = 1 abgegeben. Ausgehend vom synchronen Zustand wird immer dann mit dem Signal SA = 1 ein Synchronisieralarm gegeben, falls mehrere Synchronisierworte 100010 nicht erkannt wurden.

Das in Fig. 2 dargestellte Schieberegister RG mit seinen vielen Zellen kann unter Verwendung eines adressierbaren Speichers preisgünstig realisiert werden. In diesem Zusammenhang werden die einzelnen Zellen des Speichers derart adressiert, daß der Reihe nach die einzelnen Bits des Multiplexsignals ME gespeichert werden, wobei gleichzeitig dauernd jene Speicherzellen abgefragt werden, in denen die Synchronisierbits gespeichert sein können.

Normalerweise erscheinen die in Fig. 4 dargestellten Synchronisierbits der Synchronisierworte 100010 in einem vorgegebenen und immer gleichbleibenden Zeitschlitz des Multiplexsignals ME. Dies wird beispielsweise dadurch erreicht, daß gemäß Fig. 1 der Synchronisiergenerator SG als eine der Datenquellen geschaltet ist und die Synchronisierbits S über einen der Kanäle dem Multiplexer MUX zugeführt werden. Es wäre grundsätzlich denkbar, daß eine der in Fig. 1 dargestellten Datenquellen DQ1 bis DQn ebenfalls Synchronisierbits sendet, so daß mit dem Multiplexsignal ME zwei Synchronisierworte übertragen werden. Beispielsweise können die Synchronisierbits des einen Synchronisierwortes im ersten Zeitschlitz jedes Zeitmultiplexrahmens auftreten und die Synchronisierbits des zweiten Synchronisierwortes im siebten Zeitschlitz jedes Zeitmultiplexrahmens.

Gemäß Fig. 7 wird angenommen, daß zwei Synchronisierworte in zwei verschiedenen Zeitschlitzen und in zwei verschiedenen Kanälen auftreten. Es sind wieder mehrere Abschnitte des Zeitmultiplexsignals ME dargestellt, welche die Zeitmultiplexrahmen R55 bis R60 bzw. R61 bis R66 bzw. R67 bis R72 bzw. R73 bis R78 betreffen. Zum Zeitpunkt 15 wird mit Hilfe der in Fig. 3 dargestellten Decodierer DC1 und DC2 eines der beiden Synchronisierworte in einem der Zeitschlitze und Kanäle erkannt und einerseits mit dem Ausgangssignal des UND-Gliedes U1 und andererseits mit dem Synchronisiererkennungssignal SE signalisiert. Auf diese Weise wird — ähnlich wie zum Zeitpunkt 6 gemäß Fig. 5 — mit dem Kippstufensignal KA = 1 eine mögliche Synchronisierung angezeigt. Entsprechend dieser möglichen Synchronisierung werden die Synchronisierimpulse Tp erzeugt. Der in Fig. 3 dargestellte Synchronisierdiskriminator DIS kann aber nicht entscheiden, ob die dem Zeitpunkt 15 zugeordneten Synchronisierworte von dem in Fig. 1 dargestellten Synchronisiergenerator SG oder von irgendeiner anderen Datenquelle stammen.

Zum Zeitpunkt 16 wird mit Hilfe der Decodierer DC1, DC2 und mit Hilfe des UND-Gliedes U1 ein weiteres Synchronisierwort gemeldet, das offenbar in einem anderen Zeitschlitz auftritt und daher einem anderen Kanal zugeordnet ist. Über den Ausgang des Inverters IN2 wird zum Zeitpunkt 16 ein 1-Signal abgegeben, weil zu diesem Zeitpunkt kein Synchronisierimpuls Tp auftritt. Das Glied NOR1 hat zum Zeitpunkt 15 den Beginn einer Prüfzeit signalisiert und gibt zum Zeitpunkt 16 ebenfalls ein 1-Signal an das UND-Glied U7 ab. Mit dem Ausgangssignal des Gliedes U1 liegen also zum Zeitpunkt 16 am Glied U7 drei 1-Signale, so daß über dessen Ausgang und über das Glied OR1 ein 1-Signal an den Eingang a der Kippstufe K gegeben wird. Damit wird die Kippstufe K in ihren ersten Zustand zurückgesetzt und gibt das Signal KA = 0 ab, das die fehlende Synchronisierung kennzeichnet. Aufgrund des Signals KA = 0 wird über den Inverter IN4 ein 1-Signal an das Glied NOR1 abgegeben und damit wird die Prüfzeit bereits zum Zeitpunkt 16 wieder beendet. Gleichzeitig werden alle Inhalte der Speicherzellen des Schieberegisters SR gelöscht, so daß weiterhin mit dem Signal SA = 1 Synchronisieralarm gegeben wird. Zu den Zeitpunkten 17 und 18 bzw. 19 und 20 bzw. 21 und 22 bzw. 23 und 24 wiederholen sich die Vorgänge, die zu den Zeitpunkten 15 und 16 abgelaufen sind. Es wird somit weiterhin mit dem Signal SA = 1 Synchronisieralarm gegeben.

Wenn der anhand der Fig. 7 dargestellte Synchronisieralarm eine vorgegebene Dauer anhält, dann ist dies ein Indiz, daß nicht nur über den in Fig. 1 dargestellten Synchronisiergenerator SG Synchronisierbits eingegeben werden, sondern daß auch über mindestens einen anderen Kanal, beispielsweise mit Hilfe einer der Datenquellen DQ1 bis DQn Synchronisierbits eingegeben werden, die insgesamt Synchronisierworte bilden. Um trotzdem eine Synchronisierung zu erzielen, werden anstelle der von den in Fig. 1 dargestellten Datenquellen DQ1 bis DQn abgegebenen Signale D1 bis Dn Binärsignale mit vorgegebenen Binärwerten eingegeben. Es können dies Binärsignale entsprechend den 0-Werten oder den 1-Werten sein und es können Dauersignale gegeben werden, deren Polarität gelegentlich als Dauerstartpolarität und Dauerstoppolarität bezeichnet wird. Es werden also Signale eingegeben, die in keinen der den Datenquellen DQ1 bis DQn zugeordneten Kanälen Synchronisierworte vortäuschen. Die Eingabe dieser Binärsignale kann beispielsweise dadurch geschehen, daß die Kanäle, über welche die in Fig. 1 dargestellten Signale D1 bis Dn übertragen werden, mit Hilfe von in Fig. 1 nicht dargestellten Schaltern unterbrochen werden. Es wäre auch denkbar, diese Kanäle niederohmig mit Signalquellen zu verbinden, welche die gewünschten Binärwerte dauernd abgeben.

Durch die Abschaltung der einzelnen Kanäle der Datenquellen ist gewährleistet, daß der in Fig. 3 dargestellte Synchronisierdiskriminator jene Synchronisierworte erkennt, deren Synchronisierbits einem einzigen Kanal und einem einzigen Zeitschlitz zugeordnet sind. Der Synchronisierdiskriminator arbeitet somit, wie anhand der Fig. 5 bereits erläutert wurde und signalisiert zum Zeitpunkt 10 mit dem Signal SA = 0 das Ende des Synchronisieralarms.

Wenn also Synchronisierworte auftreten, die mehreren Zeitschlitzen und mehreren Kanälen zuzuordnen sind, dann wird der Zeitmultiplexrahmen durch folgende Schritte erzielt:

1. Nach Erkennung zweier aufeinanderfolgender Synchronisierworte, die beide dem gleichen Zeitschlitz und dem gleichen Kanal zuzuordnen sind, wird der Beginn der Prüfzeit P festgelegt. Zu diesem Zeitpunkt kann der Synchronisierdiskriminator nicht erkennen, ob die Synchronisierworte die richtigen Synchronisierworte oder vorgetäuschte Synchronisierworte sind.

2. Während der Dauer der Prüfzeit wird laufend überprüft, ob Synchronisierworte auftreten, die verschiedenen Zeitschlitzen und verschiedenen Kanälen zuzuordnen sind. Falls dies nicht der Fall ist, wird nach Ablauf der Prüfzeit P der Synchronisieralarm beendet. Falls dies aber der Fall ist, dann bleibt der Synchronisieralarm bestehen.

3. Nach einer vorgegebenen Dauer, während der Synchronisieralarm gegeben wurde, werden anstelle der Datenbits die sendeseitig über die Datenquellen DQ1 bis DQn eingegeben wurden, Signale gesendet, die keine Synchronisierworte vortäuschen können. Beispielsweise können Signale mit Dauerstartpolarität oder mit Dauerstoppolarität gesendet werden. Die vorgegebene Dauer ist derart bemessen, daß die Signale, die keine Synchronisierworte vortäuschen können, erst dann gesendet werden, wenn erfahrungsgemäß der Synchronisiervorgang, wie er anhand der Fig. 5 beschrieben wurde, bereits beendet ist.

4. Während der Sendung der Signale, die keine Synchronisierworte vortäuschen können, wird die Rahmensynchronisierung mit Hilfe des in Fig. 3 dargestellten Synchronisierdiskriminators vorgenommen. Nach Beendigung des Synchronisieralarms werden wieder gemäß Fig. 1 die Datensignale D1 bis Dn von den Datenquellen DQ1 bis DQn abgegeben. Wenn eine dieser Datenquellen weiterhin Synchronisierworte eingibt, dann stört dies nicht, weil die Prüfzeit abgelaufen und das Glied U7 gesperrt ist.

Die Beschreibung der Fig. 1 bis 7 bezieht sich auf ein Ausführungsbeispiel zur Realisierung des vorliegenden Verfahrens, wobei der synchrone Zustand an Hand der Fig. 4, der Übergang vom nichtsynchronen in den synchronen Zustand an Hand der Fig. 5, der Übergang vom synchronen in den nichtsynchronen Zustand an Hand der Fig. 6 und die Auswirkungen der Synchronisierbits in mehreren Zeitschlitzen des Zeitmultiplexrahmens an Hand der Fig. 7 beschrieben wurden.

## Patentansprüche

1. Verfahren zur Rahmensynchronisierung eines Zeitmultiplexsystems mit einem Multiplexer, der pro Zeitmultiplexrahmen m Zeitschlitze bereitstellt und der ein Zeitmultiplexsignal abgibt, das pro Zeitmultiplexrahmen je $m-1$ Datenbits und je ein Synchronisierbit enthält, wonach mindestens $p \geqslant 6$ einander folgende Synchronisierbits ein Synchronisierwort bilden, wonach vor Erreichen eines synchronen Zustandes ein Synchronisieralarmsignal abgegeben wird, und wonach mit einem Synchronisiersignal die Rahmensynchronisierung beeinflußt wird, gekennzeichnet durch die folgenden Schritte:

A) wenn im nicht synchronen Zustand (SA = 1) zwei aufeinanderfolgende Synchronisierworte (100010) erkannt werden, und wenn das Synchronisiersignal (Tp) in Phase mit den beiden Synchronisierworten (100010) ist, dann wird der Beginn eines Prüfzustandes (NOR1 = 1) und einer Prüfzeit (P) festgelegt.

B) Der Prüfzustand (NOR1 = 1) wird durch Übergang in den synchronen Zustand (SA = 0) beendet, falls das Synchronisiersignal (Tp) in Phase ist mit den Synchronisierworten (100010) und falls während p Zeitmultiplexrahmen oder einem Vielfachen von p Zeitmultiplexrahmen fortlaufend Synchronisierworte (100010) empfangen werden.

C) Der Prüfzustand (NOR1 = 1) wird durch Übergang in den nicht synchronen Zustand (SA = 1) beendet, falls das Synchronisiersignal (Tp) in Phase ist mit den Synchronisierworten (100010) und ein Synchronisierwort (100010) nicht erkannt wird oder falls bei nicht eingephastem Synchronisiersignal (Tp) mindestens zwei Synchronisierworte (100010) erkannt werden, deren Synchronisierbits (S) in verschiedenen Zeitschlitzen der Zeitmultiplexrahmen liegen.

2. Verfahren nach Anspruch 1, gekennzeichnet durch folgende Schritte:

A) Nach einer vorgegebenen Dauer des Synchronisieralarmsignals (SA = 1) werden anstelle der Datenbits sendeseitiger Datenquellen (DQ1 ... DQn) Binärsignale vorgegebener Binärwerte gesendet, die sich von den Synchronisierworten (100010) unterscheiden.

B) Nach erfolgter Rahmensynchronisierung werden wieder die Datenbits der sendeseitigen Datenquellen gesendet (Fig. 1 und 7).

3. Verfahren nach Anspruch 1, dadurch gekennzeichnet, daß die empfangsseitige Erkennung zweier aufeinanderfolgender Synchronisierworte (100010) mit Hilfe eines Synchronisiersignals (Tp) signalisiert wird, daß der nichtsynchrone Zustand bzw. der synchrone Zustand mit Hilfe einer bistabilen Kippstufe signalisiert wird, die ein erstes bzw. zweites Kippstufensignal (KA = 0 bzw. KA = 1) abgibt, daß das erste bzw. zweite Kippstufensignal (KA = 0 bzw. KA = 1) mindestens eine Periode des Synchronisiersignals (Tp) verzögert wird und ein verzögertes erstes bzw. zweites Kippstufensignal (KAV = 0 bzw. KAV = 1) erzeugt wird und daß bei Koinzidenz des zweiten Kippstufensignals (KA = 1) mit dem verzögerten ersten Kippstufensignal (KAV = 0) der Beginn der Prüfzeit (P) signalisiert wird.

4. Schaltungsanordnung zur Durchführung des Verfahrens nach Anspruch 3, dadurch gekennzeichnet, daß ein Schieberegister (SR) vorgesehen ist, das aus mehreren Zellen besteht, deren Inhalt beim Auftreten des ersten Kippstufensignals (KA = 0) gelöscht wird, daß dem Schieberegister (SR) die Impulse des Synchronisiersignals (Tp) als Schiebeimpulse zugeführt werden, daß dem Schieberegister (SR) das Kippstufensignal (KA) seriell zugeführt wird und daß vom Ausgang einer der Zellen des Schieberegisters (SR) das verzögerte Kippstufensignal (KAV) abgegeben wird.

## Claims

1. Method for the frame synchronisation of a t.d.m. system having a multiplexer which makes available m time slots per t.d.m. frame and which emits a t.d.m. signal which contains in each case $m-1$ data bits and one synchronising bit in respect of each t.d.m. frame, in accordance with at least $p \geqslant 6$ successive synchronising bits form a synchronising word, in accordance with which a synchronising alarm signal is emitted before a synchronous state is obtained, and in accordance with which the frame synchronisation is affected by a synchronising signal, characterised by the following steps:

a) When two consecutive synchronising words (100010) are recognised in the non-synchronous state (SA = 1) and when the synchronising signal (Tp) is in phase with the two synchronising words (100010) the beginning of a testing state (NOR1 = 1) and of a testing time (P) are determined.

b) The testing state (NOR1 = 1) is terminated by the transition into the synchronous state (SA = 0) if the synchronising signal (Tp) is in phase with the synchronising words (100010) and if synchronising words (100010) are continuously received during p t.d.m. frames or a multiple of p t.d.m. frames.

c) The testing state (NOR1 = 1) ist terminated by the transition into the non-synchronous state (SA = 1) if the synchronising signal (Tp) is in phase with the synchronising words (100010) and one synchronising word (100010) is not recognised or if in the case of a non-phased-in synchronising signal (Tp) at least two synchronising words (100010) whose synchronising bits (S) lie in different time slots of the t.d.m. frame are recognised.

2. Method as claimed in claim 1, characterised by the following steps:

a) Following a predetermined duration of the synchronising alarm signals (SA = 1) binary signals of predetermined binary values which differ from the synchronising words (100010) are transmitted in place of the data bits of data sources (DQ1 ... DQn) at the transmitting end.

b) Following the effected frame synchronisation the data bits of the data sources at the transmitting end are again transmitted (Figure 1 and 7).

3. Method as claimed in claim 1, characterised in that the recognition of two consecutive synchronising words (100010) at the transmitting end is signalled with the aid of a synchronising signal (Tp), that the non-synchronous state and the synchronous state are signalled with the aid of a bistable trigger stage which emits a first or a second trigger stage signal respectively (KA = 0 and KA1), that the first or, as the case may be, second trigger stage signal (KA = 0 and KA = 1) is delayed by at least one period of the synchronising signal (Tp) and that a delayed first or second trigger stage signal respectively (KAV = 0 and KAV = 1) is produced, and that the beginning of the testing time (P) is signalled when the second trigger stage signal (KA = 1) coincides with the delayed first trigger stage signal (KAV = 0).

4. Circuit arrangement for implementing the method according to claim 3, characterised in that a shift register (SR) is provided which consists of a plurality of cells whose content is erased when the first trigger stage signal (KA = 0) occurs, that the shift register (SP) is supplied with the pulses of the synchronising signal (Tp) as shift pulses, that the trigger stage signal (KA) is fed to the shift register (SR) in serial form, and that the delayed trigger stage signal (KAV) is emitted by the output of one of the cells of the shift register (SR).

## Revendications

1. Procédé pour réaliser la synchronisation de trame d'un système de multiplexage par répartition dans le temps comportant un multiplexeur, qui prépare m créneaux temporels pour chaque trame de multiplexage par répartition dans le temps et qui délivre un signal de multiplexage par répartition dans le temps qui continent, pour chaque trame de multiplexage, (m − 1) bits de données et un bit de synchronisation, et selon lequel au moins p ⩾ 6 bits successifs de synchronisation forment un mot de synchronisation, un signal d'alarme de synchronisation est délivré avant qu'un état synchrone soit atteint, et la synchronisation de trame est influencée par un signal de synchronisation, caractérisé par les phases opératoires suivantes:

A) Lorsque, dans le cas de l'état non synchrone (SA = 1), deux mots de synchronisation successifs (100010) sont identifiés et lorsque le signal de synchronisation (Tp) est en phase avec les deux mots de synchronisation (100010), le début d'un état de contrôle (NON-OU 1 = 1) et d'une durée de contrôle (P) est fixé.

B) L'état de contrôle (NON-OU1 = 1) cesse, par suite du passage à l'état synchrone (SA = 0), dans le cas où le signal de synchronisation (Tp) est en phase avec les mots de synchronisation (100010) et dans le cas où pendant p trames de multiplexage par répartition dans le temps ou bien pendant un multiple de p trames de multiplexage par répartition dans le temps, des mots de synchronisation (100010) sont reçus en permanence.

C) L'état de contrôle (NON-OU1 = 1) cesse par suite du passage à l'état non synchrone (SA = 1), dans le cas où le signal (Tp) est en phase avec les mots de synchronisation (100010) et où un mot de synchronisation (100010) n'est pas identifié ou bien dans le cas où, le signal de synchronisation (Tp) n'étant pas réglé en phase, il il se produit l'identification d'au moins deux mots de synchronisation (100010), dont les bits de synchronisation (S) sont situés dans des créneaux temporels différents des trames de multiplexage par répartition dans le temps.

2. Procédé suivant la revendication 1, caractérisé par les phases opératoires suivantes:

A) Après une durée prédéterminée du signal d'alarme de synchronisation (SA = 1), à la place des bits de données de sources de données (DQ1 ... DQn) situées du côté émission se trouvent émis des signaux binaires possédans des valeurs prédéterminées et qui diffèrent des mots de synchronisation (100010).

B) Une fois obtenue la synchronisation de trame, les bits de données des sources de données situées du côté émission sont à nouveau émis (figures 1 et 7).

3. Procédé suivant la revendication 1, caractérisé par le fait que l'identification, effectuée du côté réception, de deux mots de synchronisation successifs (100010) est signalée à l'aide d'un signal de synchronisation (Tp), que l'état non synchrone ou l'état synchrone est signalé à l'aide d'un étage à bascule bistable qui délivre un premier ou un second signal (KA = 0 ou KA = 1), que le premier ou le second signal (KA = 0 ou KA = 1) de l'étage à bascule bistable est retardé d'au moins une période du signal de synchronisation (Tp), qu'un premier ou un second signal retardé (KAV = 0 ou KAV = 1) de l'étage à bascule bistable est produit et que, dans le cas de la coïncidence du second signal (KA = 1) avec le premier signal retardé (KAV = 0), le début de la durée de contrôle (P) est signalée.

4. Montage pour la mise en œuvre du procédé suivant la revendication 3, caractérisé par le fait qu'il est prévu un registre à décalage (SR) qui se compose de plusieurs cellules dont le contenu est effacé lors de l'apparition du premier signal (KA = 0) de l'étage à bascule bistable, que les impulsions du signal de synchronisation (Tp) sont envoyées en tant qu'impulsions de transfert au registre à décalage (SR), que le signal (KA) de l'étage à bascule bistable est envoyé de façon séquentielle au registre à décalage (SR) et que le signal (KAV) retardé de l'étage à bascule bistable est délivré par la sortie de l'une des cellules du registre à décalage (SR).

# FIG 1

# FIG 2

FIG 3

0 004 562

13

0 004 562

FIG 4

FIG 5

# FIG 6

| ME | R31—R36 | R37—R42 | R43—R48 | R49—R54 |
|---|---|---|---|---|

Tp

U3

Tq

KA

SA

# FIG 7

| ME | R55—R60 | R61—R66 | R67—R72 | R73—R78 |
|---|---|---|---|---|

Tp

U1

KA

SE

KAV    0

NOR1

U7

SA    1